# EUROPEAN PATENT APPLICATION

(11) **EP 2 654 282 A1**
(43) Date of publication of application: **23.10.2013**
(21) Application number: 11849147.1
(22) Date of filing: 15.11.2011
(51) Int. Cl.: H04M 11/00, H04M 3/00, H04W 48/16

(54) **MOBILE COMMUNICATION METHOD AND MOBILE MANAGEMENT NODE**

(30) Priority: 17.12.2010 JP 2010282253
(71) Applicant: NTT DOCOMO, INC., Chiyoda-ku Tokyo 100-6150 (JP)
(72) Inventor: MORITA, Takashi, Tokyo 100-6150 (JP); TANAKA, Itsuma, Tokyo 100-6150 (JP)
(74) Representative: HOFFMANN EITLE
(86) International application number: PCT/JP2011/076238
(87) International publication number: WO 2012/081345

(57) **Abstract**

A mobile communication method according to the present invention includes the steps of: transmitting, by a UE, "Attach Request" for E-UTRAN; transmitting, by an MME, "Attach Reject" in which "#15" is set as "Cause value" to the UE when receiving a notification indicating that the UE cannot be connected to a desired PDN from an authentication server 1 and the MME determines that the UE can utilize CS communications, after receiving the "Attach Request;" and transmitting, by the UE, "Attach Request" for UTRAN/GERAN when the UE receives the "Attach Reject" in which "#15" is set as "Cause value."

## Description

### TECHNICAL FIELD

The present invention relates to a mobile communication method and a mobility management node.

### BACKGROUND ART

In the international standard specifications of the LTE (Long Term Evolution) scheme, a UE (User Equipment: mobile station) is configured to be connected to a desired external network (PDN: Packet Data Network) in an attach procedure for E-UTRAN (Evolved-Universal Terrestrial Radio Access Network).

The UE can utilize PS (Packet Switch) communications and CS (Circuit Switch) service (voice communications and SMS communications) after the attach procedure for the E-UTRAN is normally completed.

### PRIOR ART DOCUMENT

### NON-PATENT DOCUMENT

Non-patent document 1: 3GPP TS24.301

### SUMMARY OF THE INVENTION

### PROBLEM TO BE SOLVED BY THE INVENTION

Meanwhile, in the attach procedure, the connection of the UE to the desired PDN may be failed to be established in a core network because there is no contract of the UE to the desired PDN or because a failure has occurred in an authentication server 1. In such cases, the attach procedure itself is also failed, and the UE thus cannot utilize not only the PS communications but also the CS service.

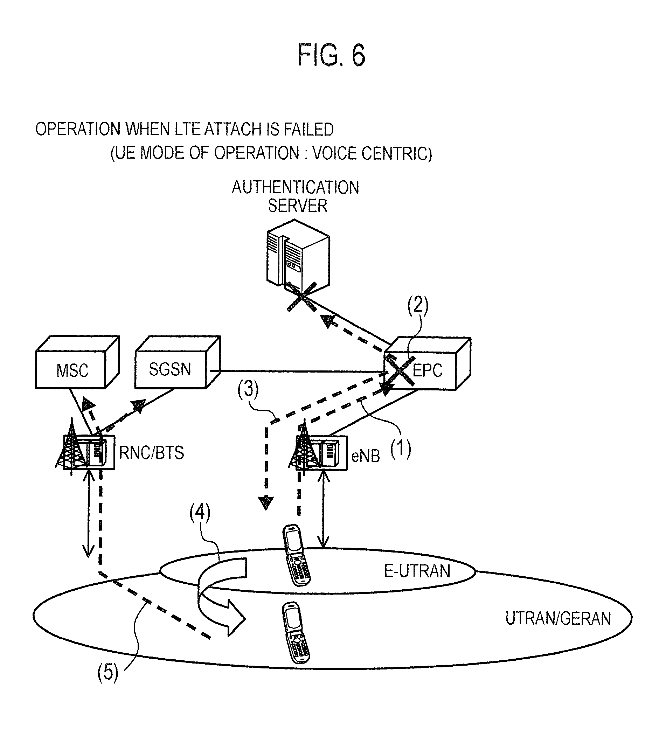

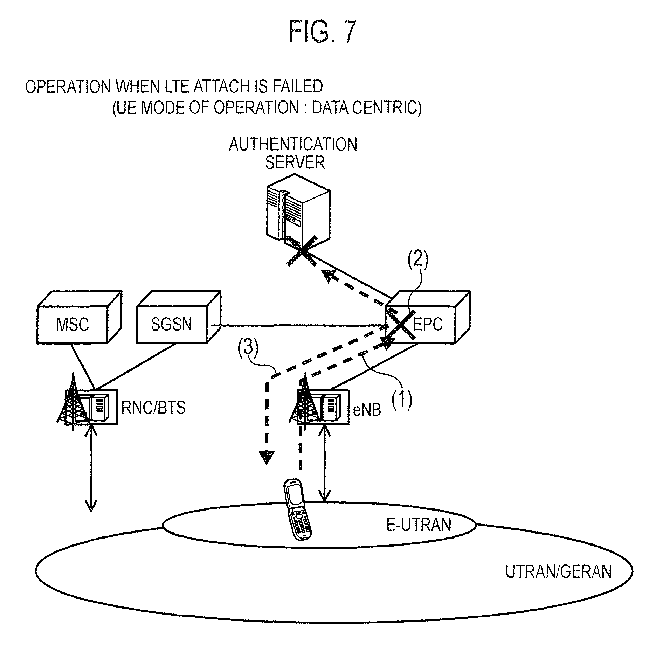

Here, operations of a conventional mobile communication system when the attach procedure for the E-UTRAN is failed will be described with reference to Figs. 6 and 7.

First, an operation when "UE mode of operation" in the UE has been set to "voice centric (voice communications is prioritized)" will be described with reference to Fig. 6.

As shown in Fig. 6, in (1), the UE transmits "Attach Request" for the E-UTRAN.

In (2), an MME (Mobility Management Entity, mobility management node) in an EPC (Evolved Packet Core) determines that the UE cannot be connected to a desired PDN.

In (3), the MME transmits "Attach Reject" in which "Cause value," which is a value indicating the cause of rejection of the attach procedure, is set to the UE.

In (4), the UE determines to transition to UTRAN (Universal Terrestrial Radio Access Network)/GERAN (GSM EDGE Radio Access Network) because the "UE mode of operation" has been set to the "voice centric." In (5), the UE then transmits "Attach Request" for the UTRAN/GERAN.

Thereafter, once the attach procedure for the UTRAN/GERAN is normally completed, the UE can utilize the CS communications by utilizing the UTRAN/GERAN.

However, in such case, the UE invalidates communications utilizing the E-UTRAN, leading to a problem that the UE cannot perform communications utilizing the E-UTRAN unless the power of the UE is re-turned on even when the cause of failure of the attach procedure for the E-UTRAN is resolved.

Secondly, an operation when the "UE mode of operation" in the UE has been set to "data centric (data communications priority)" will be described with reference to Fig. 7.

As shown in Fig. 7, in (1), the UE transmits "Attach Request" for the E-UTRAN.

In (2), the MME in the EPC determines that the UE cannot establish connection to a desired PDN.

In (3), the MME transmits "Attach Reject" in which "Cause value," which is a value indicating the cause of rejection of the attach procedure, is set to the UE.

Here, the "UE mode of operation" has been set to "data centric." Accordingly, when the UE receives "Attach Reject" in which a value other than "#15" has been set as the "Cause value," the UE continues transmitting the "Attach Request" for the E-UTRAN.

This results in a problem that the UE cannot utilize the CS service even when the UE can perform the CS communications utilizing the UTRAN/GERAN.

In addition, there is a problem that since the telecommunications carrier cannot control the above-described "UE mode of operation," the telecommunications carrier cannot provide integrated services.

For example, suppose a case where when the attach procedure for the E-UTRAN is failed, the telecommunications carrier wishes to secure the provision of the CS service when the failure occurs in the system for the PS communications. Even in such case, whether or not such operation is possible depends on the setting of the "UE mode of operation" in each UE.

The present invention has been made in view of the above-described problem, and has an objective to provide a mobile communication method and a mobility management node which can appropriately provide a PS service and a CS service without depending on the setting of the "UE mode of operation" in each UE.

### MEANS FOR SOLVING THE PROBLEM

A first feature of the present invention is summarized as a mobile communication method including the steps of: transmitting, by a mobile station, an attach request signal for a first radio access network that does not support circuit-switched communications; transmitting, by a mobility management node connected to the first radio access network, a connection request for the mobile station to be connected to a desired external network, to an authentication server, upon receipt of the attach request signal; providing, by the authentication server, a notification to the mobility management node when the authentication server determines that the mobile station cannot be connected to the desired external network, the notification indicating the determination; transmitting, by the mobility management node, an attach reject signal in which a predetermined value is set as a value indicating a cause of rejection of the attach request signal, to the mobile station, when the mobility management node determines that the mobile station can utilize the circuit-switched communications, upon receipt of the notification; and transmitting, by the mobile station, an attach request signal for a second radio access network that supports the circuit-switched communications when the mobile station receives the attach reject signal in which the predetermined value is set.

A second feature of the present invention is summarized as a mobility management node connected to a first radio access network that does not support circuit-switched communications, the mobility management node including: a reception unit configured to receive an attach request signal for the first radio access network from a mobile station; and a transmission unit configured to transmit a connection request for the UE to be connected to be connected to a desired external network, to an authentication server, upon receipt of the attach request signal, wherein the transmission unit is configured to transmit an attach reject signal in which a predetermined value is set as a value indicating a cause of rejection of the attach request signal, to the mobile station, when the reception unit receives a notification indicating that the authentication server determines that the mobile station cannot be connected to the desired external network from the authentication server and it is determined that the mobile station can utilize the circuit-switched communications.

A third feature of the present invention is summarized as a mobile communication method including the steps of: transmitting, by a mobile station, an attach request signal for a first radio access network that does not support circuit-switched communications; transmitting, by a mobility management node connected to the first radio access network, a connection request for the UE to be connected to a desired external network, to an authentication server, upon receipt of the attach request signal; providing, by the authentication server, a notification to the mobility management node when the authentication server determines that the mobile station cannot be connected to the desired external network, the notification indicating the determination; transmitting, by the mobility management node, a connection request to a predetermined external network, when the mobility management node determines that the mobile station can utilize the circuit-switched communications, upon receipt of the notification; and transmitting, by the mobility management node, an attach response signal to the mobile station when the mobile station has been successfully connected to the predetermined external network.

A fourth feature of the present invention is summarized as a mobility management node connected to a first radio access network that does not support circuit-switched communications, the mobility management node including: a reception unit configured to receive an attach request signal for the first radio access network from a mobile station; and a transmission unit configured to transmit a connection request for the mobile station to be connected to a desired external network, to an authentication server, upon receipt of the attach request signal, wherein the transmission unit is configured to transmit a connection request to a predetermined external network, when the reception unit receives a notification indicating that the authentication server determines that the mobile station cannot be connected to the desired external network from the authentication server and it is determined that the mobile station can utilize the circuit-switched communications, and the transmission unit is configured to transmit an attach response signal to the mobile station when the mobile station has been successfully connected to the predetermined external network.

### EFFECT OF THE INVENTION

As described above, the present invention can provide a mobile communication method and a mobility management node which can appropriately provide a PS service and a CS service without depending on the setting of the "UE mode of operation" in each UE.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of an MME according to the first embodiment of the present invention.
[Fig. 3] Fig. 3 is a sequence diagram showing an operation of the mobile communication system according to the first embodiment of the present invention.
[Fig. 4] Fig. 4 is a functional block diagram of an MME according to Modification 1 of the present invention.
[Fig. 5] Fig. 5 is a sequence diagram showing an operation of a mobile communication system according to Modification 1 of the present invention.
[Fig. 6] Fig. 6 is a diagram for explaining a problem of a conventional mobile communication system.
[Fig. 7] Fig. 7 is a diagram for explaining a problem of the conventional mobile communication system.

### MODES FOR CARRYING OUT THE INVENTION

### (Mobile Communication System according to First Embodiment of Present Invention)

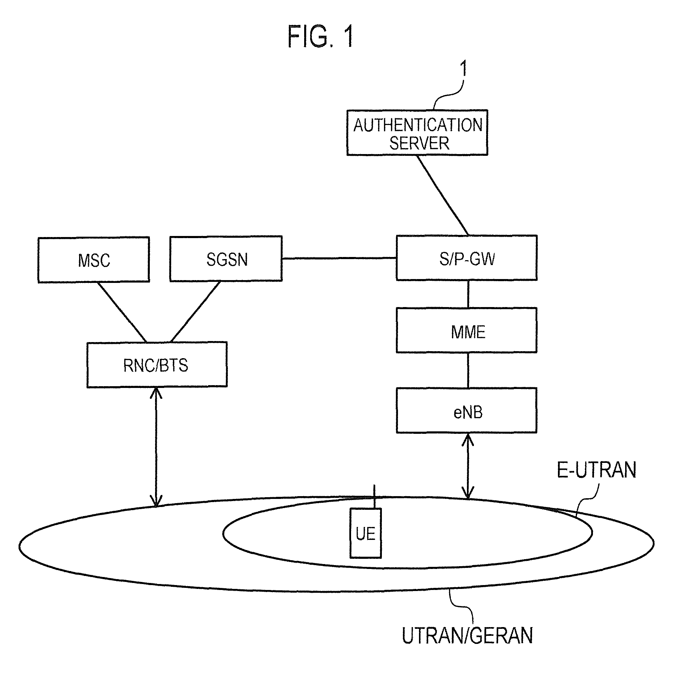

A mobile communication system according to a first embodiment of the present invention will be described with reference to Figs. 1 to 3.

The mobile communication system according to the embodiment is a mobile communication system accommodating E-UTRAN and UTRAN/GERAN, and as shown in Fig. 1, includes an authentication server 1, an S/P-GW (Serving/PDN-Gateway, gateway apparatus), an MME, an MSC (Mobile Switching Center, circuit switch), an SGSN (Serving GPRS Supporting Node, packet switch), an RNC (Radio Network Controller, radio network control station)/BTS (Base Transceiver Station, radio base station), and an eNB (radio base station).

Here, in the example of Fig. 1, the cover area of the E-UTRAN is included in the cover area of the UTRAN/GERAN.

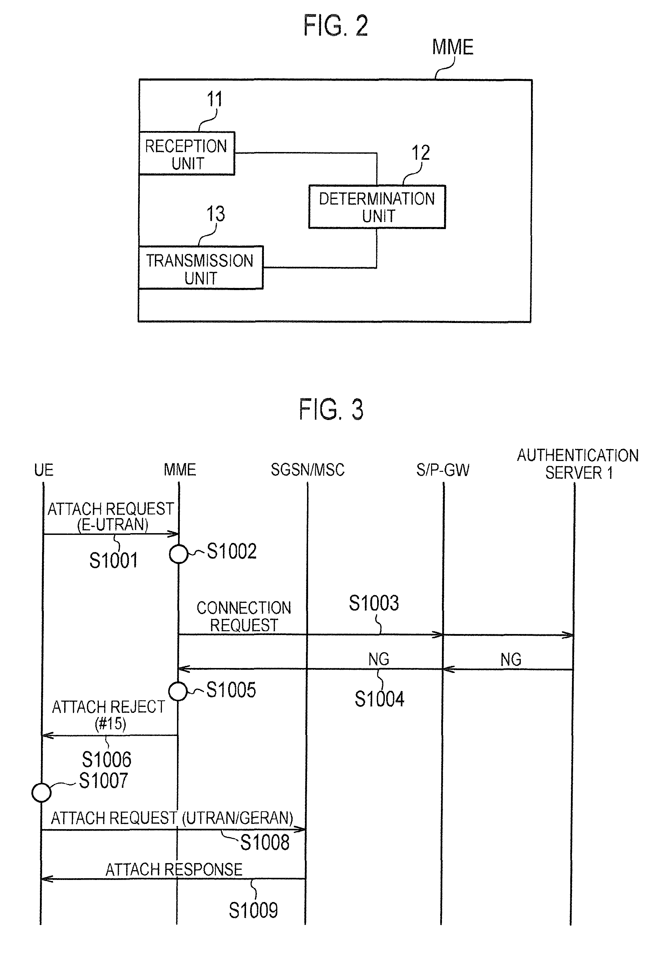

As shown in Fig. 2, the MME includes a reception unit 11, a determination unit 12, and a transmission unit 13.

The reception unit 11 is configured to receive "Attach Request" for the E-UTRAN, which is transmitted by a UE.

In addition, the reception unit 11 is configured to receive a notification (No Good (NG)) indicating that it is determined that the UE cannot be connected to a desired PDN from the authentication server 1.

The determination unit 12 is configured to determine whether or not the UE can utilize CS communications, when the reception unit 11 receives the "Attach Request."

For example, the determination unit 12 is configured to determine that the UE can utilize the CS communications when the UE is a terminal having an ability of the CS communications, such as a handset-type terminal.

The transmission unit 13 is configured to transmit a connection request for the UE to be connected to the desired PDN, to the authentication server 1, when the reception unit 11 receives the "Attach Request."

In addition, the transmission unit 13 is configured to transmit "Attach Reject" in which "#15" is set as "Cause value" to the UE, when the reception unit 11 receives the notification (NG) indicating that it is determined that the UE cannot be connected to the desired PDN from the authentication server 1 and when the determination unit 12 determines that the UE cannot be connected to the desired PDN and determines that the UE can utilize the CS communications.

Hereinafter, an example of an operation of the mobile communication system according to the first embodiment of the present invention will be described with reference to Fig. 3.

As shown in Fig. 3, in Step S1001, the UE transmits "Attach Request" for the E-UTRAN to the MME.

In Step S1002, the MME determines whether or not the UE can be connected to a desired PDN in a core network.

For example, the MME determines that the UE cannot be connected to the desired PDN when an APN of the UE has not been set, when there is a setting error in the spell of the APN of the UE, or when the APN of the UE is an APN that is not contracted.

In the example of Fig. 3, the MME is assumed to determine that the UE can be connected to the desired PDN in the core network. Note that the processing in Step S1002 maybe omitted.

In Step S1003, the MME transmits a connection request for the UE to be connected to the desired PDN, to the authentication server 1 via the S/P-GW.

Here, the authentication server 1 determines whether or not the UE can be connected to the desired PDN.

For example, the authentication server 1 determines that the UE cannot be connected to the desired PDN when there is no contract of the UE to the desired PDN or when a failure has occurred in the authentication server 1 itself.

In the example of Fig. 3, the authentication server 1 is assumed to determine that the UE cannot be connected to the desired PDN.

In Step S1004, the authentication server 1 transmits a notification (NG) indicating that the UE cannot be connected to the desired PDN to the MME.

In Step S1005, the MME determines whether or not the UE can utilize the CS communications upon receipt of the notification (NG). In the example of Fig. 3, the MME is assumed to determine that the UE can utilize the CS communications.

In Step S1006, the MME transmits "Attach Reject" in which "#15" is set as "Cause value" to the UE.

Since "#15" is set as "Cause value" in the received "Attach Reject," the UE temporarily invalidates a TA (Tracking Area) in which the UE is currently located, irrespective of the setting of "UE mode of operation," in Step S1007, and transmits "Attach Request" for the UTRAN/GERAN to the SGSN/MSC in Step S1008.

Once an attach procedure of the UE for the UTRAN/GERAN is normally completed, the SGSN/MSC transmits "Attach Response" indicating the completion to the UE in Step S1009.

In the mobile communication system according to the first embodiment of the present invention, the MME is configured such that, in the attach procedure of the UE, the MME transmits "Attach Reject" in which "#15" is set as "Cause value" to the UE, irrespective of the setting of the "UE mode of operation" in the UE, when the MME receives the notification indicating that it is determined that the UE cannot be connected to the desired PDN from the authentication server 1, and determines that the UE can utilize the CS communications.

For this reason, the mobile communication system according to the first embodiment of the present invention can appropriately provide the PS service and the CS service without depending on the setting of the "UE mode of operation" in each UE.

### (Modification 1)

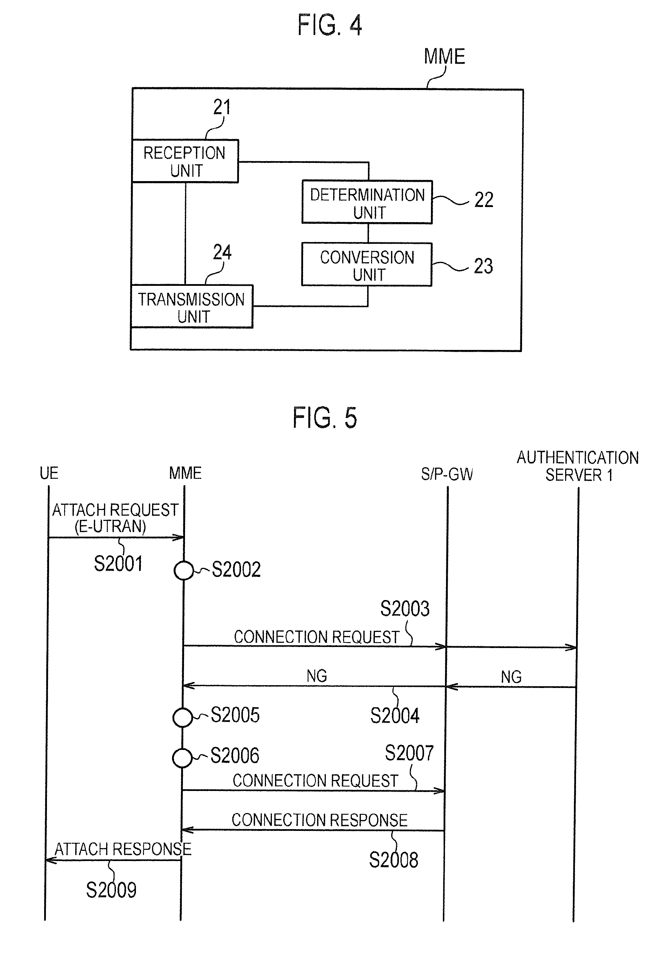

Hereinafter, a mobile communication system according to Modification 1 of the present invention will be described with reference to Figs. 4 and 5, with a focus placed on differences from the mobile communication system according to the above-described first embodiment.

As shown in Fig. 4, an MME includes a reception unit 21, a determination unit 22, a conversion unit 23, and a transmission unit 24.

The reception unit 21 is configured to receive "Attach Request" for E-UTRAN from a UE.

In addition, the reception unit 21 is configured to receive a notification (NG) indicating that it is determined that the UE cannot be connected to a desired PDN from the authentication server 1.

Further, the reception unit 21 is configured to receive a connection response indicating that the UE has been successfully connected to a predetermined PDN from an S/P-GW.

The determination unit 22 is configured to determine whether or not the UE can utilize CS communications, when the reception unit 21 receives the above-described notification (NG).

In addition, the determination unit 22 may be configured to determine whether or not the UE can be connected to the desired PDN when the reception unit 21 receives the "Attach Request."

The conversion unit 23 is configured to convert an APN (Access Point Name) of the desired PDN for the UE to an APN of a predetermined PDN held by the conversion unit 23.

The transmission unit 24 is configured to transmit a connection request to the predetermined PDN, that is, transmit a connection request including the APN of the predetermined PDN, when the reception unit 21 receives the notification (NG) indicating that it is determined that the UE cannot be connected to the predetermined PDN and when the determination unit 22 determines that the UE can utilize the CS communications.

In addition, the transmission unit 24 is configured to transmit "Attach Response" to the UE when the UE has been successfully connected to the predetermined PDN.

Hereinafter, an example of an operation of the mobile communication system according to Modification 1 of the present invention will be described with reference to Fig. 5.

As shown in Fig. 5, in Step S2001, the UE transmits "Attach Request" for the E-UTRAN to the MME.

In Step S2002, the MME determines whether or not the UE can be connected to a desired PDN in the core network.

In the example of Fig. 5, the MME is assumed to determine that the UE can be connected to the desired PDN. Note that the processing in Step S2002 may be omitted.

In Step S2003, the MME transmits a connection request for the UE to be connected to the desired PDN, to the authentication server 1 via the S/P-GW.

Here, the authentication server 1 determines whether or not the UE can be connected to the desired PDN.

In the example of Fig. 5, the authentication server 1 is assumed to determine that the UE cannot be connected to the desired PDN.

In Step S2004, the authentication server 1 transmits a notification (NG) indicating that the UE cannot be connected to the desired PDN to the MME.

In Step S2005, the MME determines whether or not the UE can utilize CS communications. In the example of Fig. 5, the MME is assumed to determine that the UE can utilize the CS communications.

In Step S2006, the MME converts an APN of the desired PDN for the UE to an APN of a predetermined PDN held by the MME.

In Step S2007, the MME transmits a connection request including the APN of the predetermined PDN to the S/P-GW.

In Step S2008, when the UE has been successfully connected to the predetermined PDN, the S/P-GW transmits a connection response indicating the successful connection, to the MME.

In Step S2009, the MME determines that the UE has been successfully connected to the predetermined PDN upon receipt of the connection response, and transmits "Attach Response" to the UE.

As a result, although having actually failed to be connected to the desired PDN, the UE has succeeded in the attach procedure to the E-UTRAN. Accordingly, the UE can utilize the CS service by means of a CSFB (Circuit Switch FallBack) procedure or the like.

The characteristics of the embodiments described so far may be expressed as follows.

A first feature of the embodiment is summarized as a mobile communication method including the steps of: transmitting, by a UE, "Attach Request (attach request signal)" for E-UTRAN (first radio access network that does not support circuit-switched communications); transmitting, by an MME (mobility management node connected to the first radio access network), a connection request for the UE to be connected to a desired PDN (external network), to an authentication server 1, upon receipt of the "Attach Request;" providing, by the authentication server 1, a notification to the MME when the authentication server 1 determines that the UE cannot be connected to the desired PDN, the notification indicating the determination; transmitting, by the MME, "Attach Reject (attach reject signal)" in which "#15 (predetermined value)" is set as "Cause value (value indicating a cause of rejection of the attach request signal)" to the UE when the MME determines that the UE can utilize CS (circuit-switched) communications, upon receipt of the notification; and transmitting, by the UE, "Attach Request" for UTRAN/GERAN (second radio access network that supports the circuit-switched communications) when the UE receives the "Attach Reject" in which "#15" is set as "Cause value."

A second feature of the embodiment is summarized as an MME including: a reception unit 11 configured to receive "Attach Request" for E-UTRAN from a UE; and a transmission unit 13 configured to transmit a connection request for the UE to be connected to a desired PDN, to an authentication server 1, upon receipt of the "Attach Request," in which the transmission unit 13 is configured to transmit "Attach Reject" in which "#15" is set as "Cause value" to the UE, when the reception unit 11 receives a notification indicating that the authentication server 1 determines that the UE cannot be connected to the desired PDN from the authentication server 1 and it is determined that the UE can utilize CS communications.

A third feature of the embodiment is summarized as a mobile communication method including the steps of: transmitting, by a UE, "Attach Request" for E-UTRAN; transmitting, by an MME, a connection request for the UE to be connected to a desired PDN, to an authentication server 1, upon receipt of the "Attach Request;" providing, by the authentication server 1, a notification to the MME when the authentication server 1 determines that the UE cannot be connected to the desired PDN, the notification indicating the determination; transmitting, by the MME, a connection request to a predetermined PDN when the MME determines that the UE can utilize CS communications, upon receipt of the notification; and transmitting, by the MME, "Attach Response (attach response signal)" to the UE when the UE has been successfully connected to the predetermined PDN.

A fourth feature of the embodiment is summarized as an MME including: a reception unit 21 configured to receive "Attach Request" for E-UTRAN from a UE; a transmission unit 24 configured to transmit a connection request for the UE to be connected to a desired PDN, to an authentication server 1, upon receipt of the "Attach Request," in which the transmission unit 24 is configured to a connection request to a predetermined PDN when the reception unit 21 receives a notification indicating that the authentication server 1 determines that the UE cannot be connected to the desired PDN from the authentication server 1 and it is determined that the UE can utilize CS communications, and the transmission unit 24 is configured to transmit "Attach Response" to the UE when the UE has been successfully connected to the predetermined PDN.

Note that the above-described operations of the UE, the eNB, the BTS, the RNC, the MME, the MSC, the SGSN, the S/P-GW, and the authentication server 1 may be implemented by hardware, may be implemented by a software module executed by a processor, or may be implemented by a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the UE, the eNB, the BTS, the RNC, the MME, the MSC, the SGSN, the S/P-GW, and the authentication server 1. Also, the storage medium and the processor may be provided in the UE, the eNB, the BTS, the RNC, the MME, the MSC, the SGSN, the S/P-GW, and the authentication server 1 as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

### EXPLANATION OF THE REFERENCE NUMERALS

- 1: authentication server
- S/P-GW: gateway apparatus
- SGSN: packet switch
- MSC: circuit switch
- eNB, BTS: radio base station
- RNC: radio network control station
- UE: mobile station
- MME: mobility management node
- 11, 21: reception unit
- 12, 22: determination unit
- 13, 24: transmission unit
- 23: conversion unit

## Claims

1. A mobile communication method comprising the steps of:
transmitting, by a mobile station, an attach request signal for a first radio access network that does not support circuit-switched communications;
transmitting, by a mobility management node connected to the first radio access network, a connection request for the mobile station to be connected to a desired external network, to an authentication server, upon receipt of the attach request signal;
providing, by the authentication server, a notification to the mobility management node when the authentication server determines that the mobile station cannot be connected to the desired external network, the notification indicating the determination;
transmitting, by the mobility management node, an attach reject signal in which a predetermined value is set as a value indicating a cause of rejection of the attach request signal, to the mobile station, when the mobility management node determines that the mobile station can utilize the circuit-switched communications, upon receipt of the notification; and
transmitting, by the mobile station, an attach request signal for a second radio access network that supports the circuit-switched communications when the mobile station receives the attach reject signal in which the predetermined value is set.

2. A mobility management node connected to a first radio access network that does not support circuit-switched communications, the mobility management node comprising:
a reception unit configured to receive an attach request signal for the first radio access network from a mobile station; and
a transmission unit configured to transmit a connection request for the UE to be connected to be connected to a desired external network, to an authentication server, upon receipt of the attach request signal, wherein
the transmission unit is configured to transmit an attach reject signal in which a predetermined value is set as a value indicating a cause of rejection of the attach request signal, to the mobile station, when the reception unit receives a notification indicating that the authentication server determines that the mobile station cannot be connected to the desired external network from the authentication server and it is determined that the mobile station can utilize the circuit-switched communications.

3. A mobile communication method comprising the steps of:
transmitting, by a mobile station, an attach request signal for a first radio access network that does not support circuit-switched communications;
transmitting, by a mobility management node connected to the first radio access network, a connection request for the UE to be connected to a desired external network, to an authentication server, upon receipt of the attach request signal;
providing, by the authentication server, a notification to the mobility management node when the authentication server determines that the mobile station cannot be connected to the desired external network, the notification indicating the determination;
transmitting, by the mobility management node, a connection request to a predetermined external network, when the mobility management node determines that the mobile station can utilize the circuit-switched communications, upon receipt of the notification; and
transmitting, by the mobility management node, an attach response signal to the mobile station when the mobile station has been successfully connected to the predetermined external network.

4. A mobility management node connected to a first radio access network that does not support circuit-switched communications, the mobility management node comprising:
a reception unit configured to receive an attach request signal for the first radio access network from a mobile station; and
a transmission unit configured to transmit a connection request for the mobile station to be connected to a desired external network, to an authentication server, upon receipt of the attach request signal, wherein
the transmission unit is configured to transmit a connection request to a predetermined external network, when the reception unit receives a notification indicating that the authentication server determines that the mobile station cannot be connected to the desired external network from the authentication server and it is determined that the mobile station can utilize the circuit-switched communications, and
the transmission unit is configured to transmit an attach response signal to the mobile station when the mobile station has been successfully connected to the predetermined external network.
